Europäisches Patentamt

European Patent Office

Office européen des brevets

(11) Veröffentlichungsnummer: **0 482 420 A1**

## (12) EUROPÄISCHE PATENTANMELDUNG

(21) Anmeldenummer: **91117156.9**

(22) Anmeldetag: **08.10.91**

(51) Int. Cl.5: **G06K 11/18**, G06F 3/033, G05G 9/047, G09G 5/08

(30) Priorität: **26.10.90 DE 4034166**

(43) Veröffentlichungstag der Anmeldung: **29.04.92 Patentblatt 92/18**

(84) Benannte Vertragsstaaten: **FR GB IT**

(71) Anmelder: **Cherry Mikroschalter GmbH Industriestrasse 19 8572 Auerbach/Opf.(DE)**

(72) Erfinder: **Frank, Manfred Bronnenmühle 2 W-8501 Grosshabersdorf(DE)**
Erfinder: **Murmann, Günter Banater Strasse 9 W-8570 Pegnitz(DE)**

(74) Vertreter: **Fleuchaus, Leo, Dipl.-Ing. et al Melchiorstrasse 42 W-8000 München 71(DE)**

(54) **Positionsanzeigevorrichtung mit Nullpunktrückstellung.**

(57) Es wird eine Cursorvorrichtung beschrieben, die in eine Tastatur integriert werden kann. Dabei wird die zweidimensionale Bewegung eines Betätigungselements in elektrische Signale gewandelt und von einer Datenverarbeitungsanlage oder einem Terminal für eine Cursorpositionierung benutzt. Da der Platz zur Bewegung begrenzt ist, empfiehlt es sich, keine absolute Cursorpositionierung vorzusehen, sondern eine relative, die durch die Auslenkung des Betätigungselements aus einer genauen Nullposition heraus gegeben ist. Es wird eine Mechanik für eine Cursorvorrichtung angegeben, welche die reproduzierbare Rückführung eines Bedienungselements gestattet.

Fig. 3

Die Erfindung bezieht sich auf Cursorvorrichtungen mit Nullpunktrückstellung gemäß dem Oberbegriff des Hauptanspruchs.

Es ist heute bei vielen Computern üblich, eine Eingabeeinheit zu benutzen, die als Maus bekannt ist und mit der man einen Zeiger oder einen Cursor über den Bildschirm bewegt. Dazu wird die Maus über eine flache Oberfläche geführt. Über ein Kabel oder auch über eine optische Fernsteuerung werden dem Computer die Änderungen der x- und y- Koordinaten zugesandt, aus denen der Computer die aktuelle Position eines Cursor- bzw. Zeigerelements auf dem Bildschirm berechnet und entsprechend abbildet.

Diese Technik hat sich in der Praxis als vorteilhaft erwiesen. Nachteilig ist, daß man zusätzlich zum Computer und zur Tastatur Platz benötigt. Außerdem muß die Hand bei normalen Anwendungen ständig zwischen Tastatur und Maus hin und her bewegt werden, was unergonomisch ist.

Deshalb bemüht man sich, in die Tastatur mausähnliche Einheiten zu integrieren. Eine solche Einheit ist z.B. in der WO 86/04166 beschrieben. Diese beschriebene Einheit hat allerdings den Nachteil, daß innerhalb von 3,2 cm Wegstrecke 2048 Punkte angesprochen werden sollen und so die Einstellgenauigkeit wesentlich größer als die manuelle Einstellmöglichkeit ist.

Diese Schwierigkeit wird vermieden, wenn die Cursorposition nicht mehr absolut, sondern nur noch relativ adressiert wird. Das läßt sich dann erreichen, wenn das Stellelement eine definierte Nullstellung besitzt, in welche es nach einer Verstellung wieder selbsttätig zurückgeführt wird und von der aus die nächste relative Positionsänderung des Cursors angefahren wird.

In der WO 86/04166 wird beschrieben, wie man das Stellelement durch Federn zurück in eine Null position ziehen kann. Bei dieser Lösung wird das Stellelement über Diagonalfedern am Gehäuse der Eingabeeinheit aufgehängt. Es ist aber aus der klassischen Mechanik bekannt, daß an Federn gekoppelte Elemente nicht in eine Nullstellung zurückgeführt werden, sondern um diese Nullstellung schwingen. Diese Schwingung kann durch Dämpfung oder Reibung unterdrückt werden. Bei zu großer Reibung oder Dämpfung wird aber das Element nicht reproduzierbar in den selben Punkt zurückgeführt, denn die Ruheposition hängt in diesem Fall von der Anfangsbedingung ab, wie z.B. Richtung und Geschwindigkeit beim Loslassen. Es ist wünschenswert, eine Vorrichtung zur Verfügung zu haben, die definiert in einen Nullpunkt rückstellbar ist und das beschriebene Schwingungsverhalten vermeidet, dabei soll die Rückstellung auch durch Schmutz nicht beeinträchtigt werden.

Aufgabe der Erfindung ist es, ein bewegliches Element mit einer eindeutigen Nullposition zu schaffen, welches eine Längenabweichung eines Einstellelements von der Nullposition aus möglichst genau in eine weiterverarbeitbare elektrische Größe wandelt und sich bei fehlender Betätigungskraft reproduzierbar und schwingungslos in die Nullposition zurückbewegt.

Die Aufgabe wird durch die Merkmale des Anspruchs 1 gelöst. Vorteilhafte Fortbildungen der Erfindung gehen aus Unteransprüchen hervor.

Zur Verringerung der Reibung ist es zweckmäßig, die Wandlung der Position in elektrische Signale optoelektronisch durchzuführen, indem Lichtlineale durch eine Lichtschranke hindurchgeführt und die so erzeugten Pulse gezählt werden.

Die Lichtlineale können entweder starr an Teilen der Mechanik angebracht oder an separaten beweglichen Teilen befestigt sein , die bei der Positionsänderung mitbewegt werden.

Um das Stellelement in die entsprechenden Richtungen möglichst genau und leichtgängig bewegen zu können, ist es zweckmäßig, die bewegliche Teile auf Schienen zu führen. In den beweglichen Teilen sind dann entsprechende Nuten vorzusehen, in welche die Schienen eingreifen.

Zur einfachen Bedienung ist ein manuell leicht zu führendes Betätigungselement anzubringen. Vorteilhaft ist es außerdem, wenn das Betätigungselement vier Tasten aufweist, die den üblichen Cursortasten zur schrittweisen Verstellung des Cursors entsprechen, da dann auch bei der Bedienung die gewohnten Operationen ausführbar sind.

Zur Verlängerung der Lebensdauer und zur Erhaltung der Genauigkeit ist es zweckmäßig, die Mechanik vor Verunreinigungen zu schützen, indem eine Abdeckung angebracht wird. Eine vorteilhafte Verwendung der Erfindung befaßt sich mit der Integration der Cursorvorrichtung in eine Tastatur.

Die Vorteile und Merkmale der Erfindung ergeben sich aus der nachfolgenden Beschreibung in Verbindung mit den Ansprüchen und der Zeichnung. Es zeigen:

Fig.1    eine Schematik zur Veranschaulichung der Mechanik gemäß der Erfindung;

Fig.2    die Schematik gemäß Fig.1, wobei sich das Stellelement außerhalb der Nullposition befindet;

Fig.3    eine Explosionszeichnung einer erfindungsgemäßen Cursorvorrichtung, in welcher die in Fig.1 und 2 gezeigte Mechanik zweimal entsprechend den zwei Bewegungsrichtungen verwendet wird;

Fig.4    ein Teil einer Tastatur, in die eine Cursorvorrichtung nach Fig.3 eingebaut ist;

Fig.5 eine Darstellung der Abdeckteile der Cursorvorrichtung gemäß Fig.3;

Fig.6 eine Explosionszeichnung der Abdeckung der Cursorvorrichtung gemäß Fig. 5;

Fig.7 eine Ausführungsform des Betätigungselements mit zusätzlichen Tasten zur Cursorsteuerung durch Tastenbetätigung.

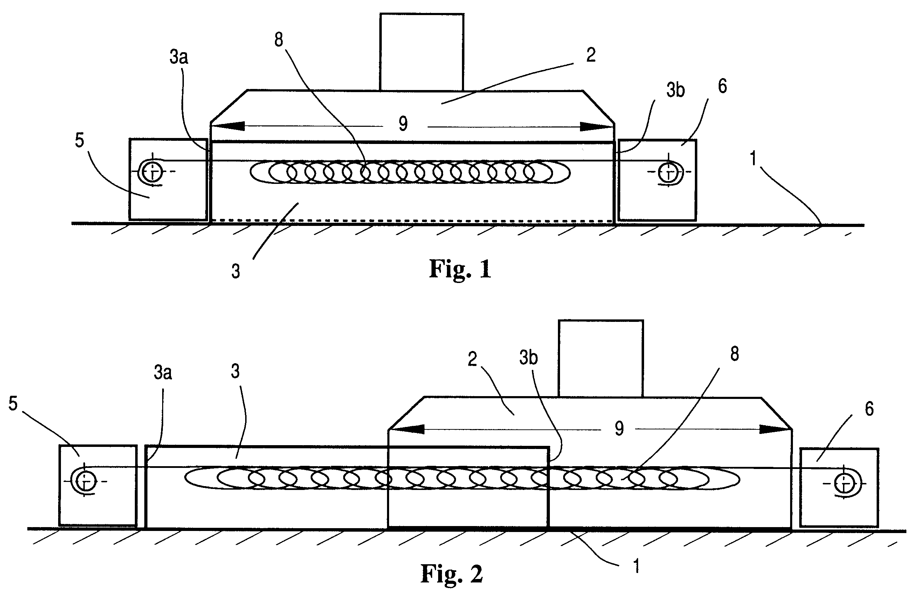

In Fig.1 und 2 ist schematisch die Wirkungsweise einer Mechanik zur Nullpunktrückstellung gezeigt, wie sie bei der Erfindung verwendet wird. Auf der Ebene 1 befindet sich ein bewegliches Stellelement 2. Das Stellelement 2 ist in Fig.1 in Ruheposition gezeichnet. Eine Auslenkung, wie aus Fig.2 hervorgeht, wird in herkömmlicher Weise z.B. mit Hilfe eines Lichtlineals und optoelektronischer Wandlung in einen elektrischen Wert gewandelt und der verarbeitenden Anlage zugeführt.

Die Nullposition wird durch eine Anlage an einem Anschlagelement 3 definiert. Wie in Fig.1 gezeigt, liegen an dem Anschlagelement 3 in Nullposition zwei bewegliche Stege 5 und 6 an, welche durch die Kraft einer Feder 8 gegeneinander gezogen werden. Die Stirnflächen des Anschlagelements 3 definieren Anschlagpositionen 3a und 3b, über die sich die Stege nicht hinwegbewegen können. Das Stellelement befindet sich also in Nullposition, wenn beide Stege 5 und 6 durch die Federkraft in die Anschlagpositionen 3a und 3b des Anschlagselements gezogen werden und dort anliegen.

Wie aus Fig.2 hervorgeht, wird bei einer Auslenkung des Stellelements 2 nach rechts auch der Steg 6 mitbewegt. Durch die Kraft der Feder 8 wird der Steg 5 in der Anschlagposition 3a festgehalten. Gleichzeitig wirkt auf Steg 6 eine Kraft, die versucht den Steg 6 zurück zum Anschlagelement 3 zu ziehen.

Nach Loslassen des Stellelements 2 wird dieses durch die Kraftwirkung der Feder 8, die über den Steg 6 übertragen wird, in die Nullposition zurückgezogen. Bei Erreichen der Nullposition gibt es nun starke kinematische Unterschiede bei der erfindungsgemäßen Mechanik im Vergleich zu der bekannten einfachen federnden Aufhängung. Bei einer federnden Aufhängung wird nämlich die in der Feder gespeicherte Energie beim Zurückschnellen fast ganz in kinetische Energie umgewandelt, was dazu führt, daß sich das Stellelement über den Nullpunkt hinaus bewegen muß. Somit ist eine Schwingung unvermeidlich. Anders liegt der Fall bei einer federnden Aufhängung, bei der man die Reibung entsprechend hoch macht. Dann kann ein Großteil der Energie in Wärme umgewandelt werden, so daß die Schwingung gedämpft wird. Da Haftreibungskoeffizienten aber immer größer als Gleitreibungskoeffizienten sind, wird der Nullpunkt nie reproduzierbar genau erreicht.

Bei der Mechanik gemäß der Erfindung kann sich dagegen die kinetische Energie auf drei Elemente aufteilen, nämlich die beiden Stege 5 und 6 und das Stellelement 2. Auch in diesem Fall muß ein Schwingungszustand eingenommen werden, wenn bei fehlender Reibung die potentielle Energie der Feder in kinetische Energie umgewandelt wird. Durch den konstruktiven Aufbau gibt es aber hier nur die Möglichkeit, daß das Stellelement zwischen den Anschlagpositionen stehenbleibt und die Bewegungsenergie von einer Schwingung der Stege allein aufgenommen wird. Dabei befindet sich das Stellelement in Ruhe, so daß Schwingungen dieser Art nicht stören. Der bei den kinematischen Betrachtungen noch zu berücksichtigende Impuls wird von dem Anschlagelement 3 aufgefangen.

Diese kinematischen Betrachtungen zeigen, daß das Stellelement abrupt in die Nullposition geführt werden kann, ohne daß man die ansonsten störende Reibung erhöhen muß. Außerdem ist die Nullposition durch den Anschlag wohl definiert, womit ein reproduzierbares Anfahren der Nullposition sichergestellt ist. Da die Breite 9 des Stellelements 2 gleich dem Abstand zwischen den Anschlagpositionen 3a und 3b ist, verschwindet die Ungenauigkeit der Nullposition, die durch ein Spiel des Stellelementes gegeben ist.

Aus obiger Betrachtung ergibt sich, daß das Stellelement 2 die Nulllage genauer Reproduzierbarkeit einnimmt. Deshalb ist es zweckmäßig, die Vorrichtung, die die Positionsänderung in einen elektrischen Wert wandelt, an das Stellelement mechanisch anzukoppeln. Damit die beschriebene Kinematik nicht gestört wird, soll die Ankopplung möglichst reibungs- und trägheitslos erfolgen. Das kann verwirklicht werden, indem man ein Lichtlineal mit dem Stellelement mitführt. Lichtlineale sind Bauteile, die periodisch unterschiedliche Lichtdurchlässigkeit aufweisen. Wird ein solches Lichtlineal über die Bewegung des Stellelements durch eine Lichtschranke geführt, die z.B. aus einer Photodiode und einem Phototransistor bestehen kann, so wird im Phototransistor eine Impulsfolge erzeugt, wobei die Anzahl der Impulse der ausgelenkten Länge entspricht. Mit einem zweiten Phototransistor wird bei dieser üblichen Methode noch ein örtlich um 90° verschobenes Signal aufgenommen, so daß es möglich ist, aus den Signalen beider Phototransistoren ein weiteres Signal zu formieren, welches angibt, in welche Richtung das Stellelement bewegt wird.

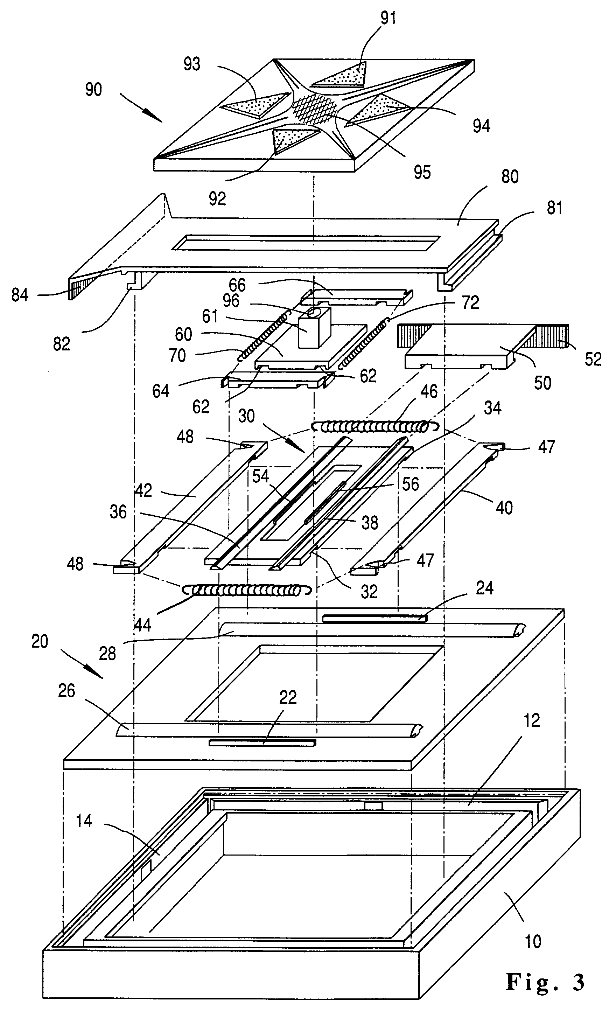

In Fig.3 ist gezeigt, wie zwei der oben beschriebenen Mechaniken in einer Cursorvorrichtung zusammenwirken, um entsprechende elektrische Signale für zwei unabhängige Bewegungsrichtungen zu erzeugen. Die gesamte Mechanik sitzt in einem Gehäuserahmen 10. Diese weist Nuten 12 und 14 auf, an deren Außenseiten die Phototransistoren und Photodioden zur Aufnahme der Position angeordnet sind. In den Nuten werden Lichtlineale 52 und 84 geführt. In dem Gehäuserahmen liegt eine ebene Grundplatte 20, die für eine Bewegungsrichtung die zugehörigen Anschlagelemente 22 und 24 aufweist. Außerdem sind Schienen 26 und 28 vorgesehen, in denen die Elemente, die den Stegen und dem Stellelement gemäß Fig.1 und Fig.2 entsprechen, besser geführt werden.

Dem in Fig.1 und 2 beschriebenen Stellelement entspricht in dieser Bewegungsebene der Schlitten 30, der mit seinen Nuten 32 und 34 auf den Schienen 26 und 28 gleitet. Die Funktion der Stege 5 und 6 wird nun von den Stegen 40 und 42 übernommen. Die Feder 44 und 46 werden in Haken 47 und 48 der Stege 40 und 42 eingehängt und drücken die Stege gegen die Stirnflächen der Anschlagelemente 22 und 24. Der hier als Stellelement dienende Schlitten 30 wird, wie schon bei Fig.1 und 2 beschrieben, von den Stegen 40 und 42 eingeschlossen. Ein Lichtlineal 52 ist über einen Halter 50 mit dem Schlitten 30 verbunden und wird bei der Bewegung des Schlittens 30 längs der Schienen 26 und 28 in der Nut 12 geführt. Während der Verschiebung des Schlittens 30 unterbricht das Lichtlineal 50 periodisch die eingebaute Lichtschranke. Dabei werden die oben beschriebenen Signale zur Positionsbestimmung der Bewegung erzeugt, die durch die Richtung der Schienen 26 und 28 gegeben ist.

Auf dem Schlitten 30 befinden sich weitere Schienen 36 und 38, die hier aber eine Bewegungsrichtung vorgeben, welche zu der durch die Schienen 26 und 28 vorgegebenen Richtung orthogonal ist. Die Schienen 36 und 38 führen die beweglichen Teile einer Mechanik, wie sie im Zusammenhang mit Fig.1 und Fig.2 beschrieben worden ist, womit eine zweite unabhängige Bewegungsrichtung ermöglicht wird. Die entsprechenden Anschlagelemente werden durch die Schlittenteile 54 und 56 verwirklicht. Ein Stellelement 60 setzt mit den Nuten 62 auf den Schienen 36 und 38 auf. Auch hier laufen zwei Stege 64 und 66 auf den Schienen 36 und 38. Die Stege 64 und 66 werden mit Federn 70 und 72 gegeneinander gezogen, so daß sie an den Anschlagelementen 56 und 54 anschlagen und das Stellelement 60 einschließen.

Über dem Stellelement 60 wird ein Oberschlitten 80 angebracht, der mit dem Stellelement mitbewegt wird, und der mit seinen Führungen 81 und 82 in den Gehäuserahmen 10 eingreift. An dem Oberschlitten 80 ist ebebfalls ein Lichtlineal 84 befestigt. Das Lichtlineal greift in die Führungsnut 14 des Gehäuses 10 ein und unterbricht dort eine nicht dargestellte Lichtschranke. Das Lichtlineal 84 dient analog zur Funktion des Lichtlineals 52 zur Aufnahme der Position, wobei aber eine orthogonale Richtung abgefragt wird.

Bei der Konstruktion gemäß Fig.3 kann das Stellelement 60 innerhalb des gesamten Innenbereiches des Gehäuserahmens 10 bewegt werden. Dabei wird die Bewegung in zwei voneinander unabhängige Richtungen zerlegt, die jeweils durch die Schienenrichtung der Schienen 26 und 28 bzw. der Schienen 36 und 38 gegeben sind. Zwei Lichtlineale 52 und 84 werden in die entsprechenden Richtungen mitgeführt und können die Bewegung optoelektronisch in elektrische Impulse umwandeln. Aus dieser Information werden elektronisch zwei Zahlenwerte gebildet, die die x- und y- Position des Stellelements repräsentieren. Bei Loslassen des Stellelements läuft dieses durch Federkraft, gegeben durch die Federn 44, 46, 70 und 72 in die Nullposition zurück, die durch die Anschlagelemente 22, 24, 54 und 56 definiert ist.

Zur besseren Bedienbarkeit kann ein gesondertes Bedienungselement 90 auf dem Stellelement 60 angebracht sein. In dem Ausführungsbeispiel nach Fig.3 ist das Bedienungselement 90 auf das Stellelement 60 aufgesteckt. Es enthält 4 Tasten 91, 92, 93 und 94, die den vier unterschiedlichen Bewegungsrichtungen zugeordnet sind. Zwischen den Tasten befindet sich eine Fingermulde 95, die eine leichte Führung des Bedienungselements gestattet. Das Bedienungselement 90 wird später im Detail beschrieben.

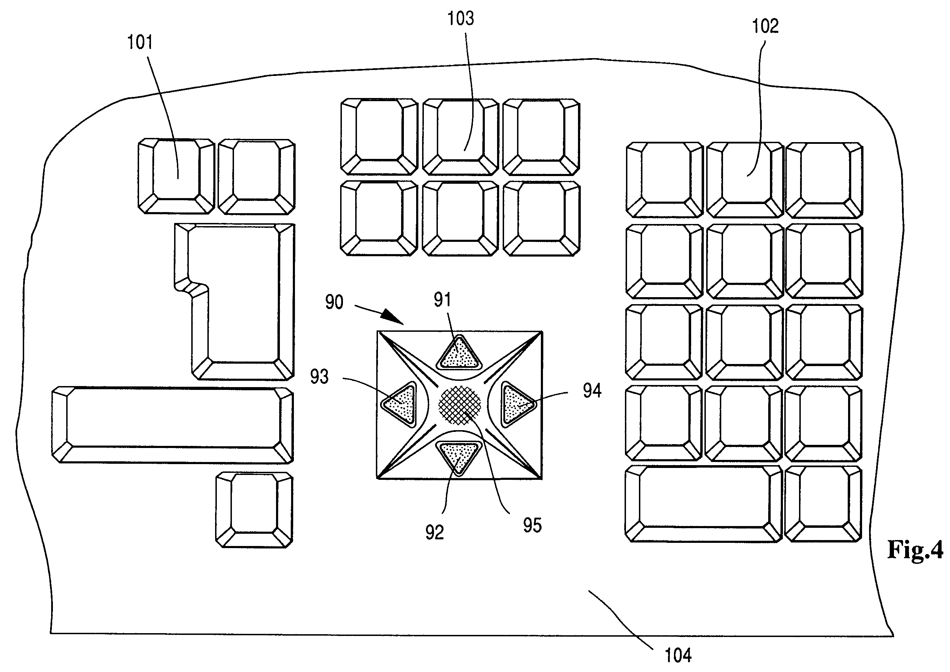

Fig.4 zeigt Teile einer Tastatur bei der die Cursorvorrichtung nach Fig.3 als Koordinatengeber für eine Cursorsteuerung eingebaut ist. Auf der linken Seite ist der alphanumerische Tastenblock 101 gezeigt. Rechts ist der Ziffernblock 102 gezeigt. Zwischen diesen beiden Tastenblöcken 101 und 102 befindet sich ein Tastenblock 103, der spezielle Funktionstasten für die Bildschirmsteuerung enthält. Darunter befindet sich die vorher beschriebene Cursorvorrichtung gemäß der Erfindung. Über der Abdeckplatte 104 des Tastaturgehäuses ist nur das Bedienungselement 90 sichtbar.

Die Cursorvorrichtung befindet sich damit an einer Position, bei der in handelsübliche Tastaturen 4 Tasten eingebaut sind, mit denen ein alphanumerischer Cursor nach oben, nach unten, nach links oder nach rechts bewegt werden kann. Durch die auf dem Bedienungselement 90 enthaltenen 4 Tasten 91, 92, 93 und 94 muß auf die gewohnte Betätigung nicht verzichtet werden. Bei der gezeigten Tastatur kann man allerdings durch Bewegung des Bedienungselements 90 den Cursor auch von Bildpunkt zu Bildpunkt bewegen. Es ist aber auch möglich, durch die Tasten 91, 92, 93 und 94 einen Cursor für die alphanumerischen Zeichen zu steuern, während durch Bewegung des Bedienungselements 90 ein zusätzlicher graphischen Cursor angesteuert wird.

Die Tasten sind in einer anderen Ausführungsform nicht auf der Oberfläche des Bedienungselements 90 angeordnet, sondern an abgeschrägten Stirnseiten des Bedienungselements 90. Bei einer derartigen Ausführung wird eine ergonomisch günstigere Betätigung in solchen Fällen erreicht, in denen man Tasten gleichzeitig mit der kontinuierlichen Bewegung des Bedienungselements betätigen will, z.B. um spezielle Marken zu setzen.

Zur Bedienung der Cursorvorrichtung wird der Finger in die Fingermulde 95 gelegt und das Bedienungselement durch leichten Druck in die gewünschte Richtung bewegt. Die geänderten Positionswerte werden dem Computer übermittelt, der daraus die aktuelle Cursorposition berechnet. Bei Loslassen der Bedienungsplatte 90 schnappt diese in die definierte Nullposition zurück, so daß für jede neue Bedienung ein vordefinierter Bezugspunkt vorhanden ist.

Bei einer anderen Ausführung kann die Cursorsteuerung auch in ein separates Gehäuse integriert werden und zusätzlich zu einer eventuell schon vorhandenen Tastatur an einen Computer oder Terminal angeschlossen werden.

Um zum einen das Gerät attraktiv gestalten zu können und zum anderen aber auch um die Mechanik vor Verunreinigungen zu schützen, ist es zweckmäßig, die Cursorvorrichtung im Bereich des Ausschnitts im Tastaturgehäuse abzudecken bzw. gegen Umgebungseinflüsse zu schützen.

Der Ausschnitt 106 im Tastaturgehäuse 104 muß relativ groß sein, damit die Bewegung des Positionierstifts 61 nicht behindert wird. Bei der einfachsten Möglichkeit der Abdeckung wird das Bedienungselement 90 entsprechend groß gemacht. Diese Lösung verlangt aber auch einen entsprechenden Einbauraum und schränkt stark die Designmöglichkeiten ein, so daß im allgemeinen ergänzende Abdeckungen benötigt werden.

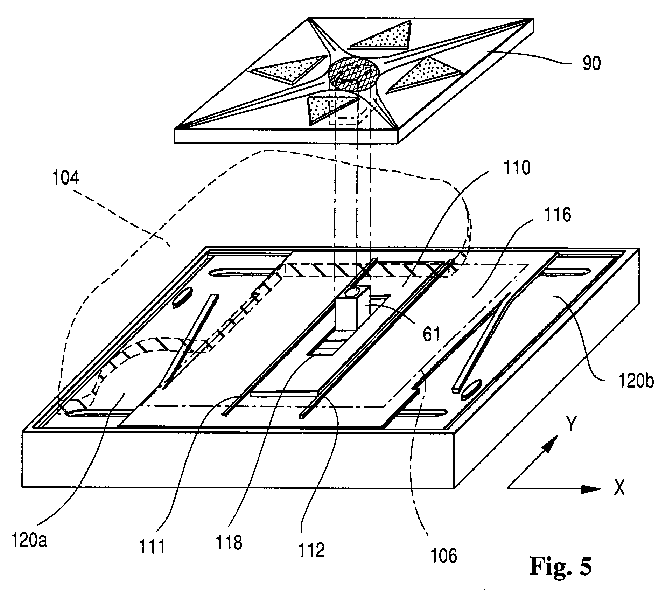

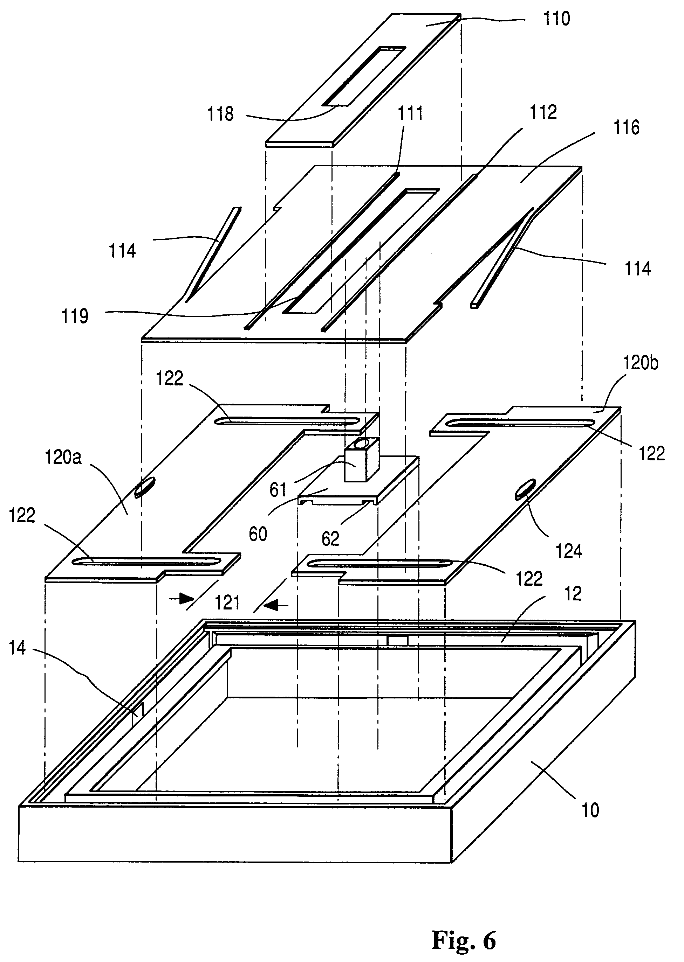

Aus den Fig.5 und 6 ist ersichtlich, daß für eine möglichst geschlossene Abdeckung verschiebare Platten benützt werden. Dabei ist die Abdeckung in drei Ebenen aufgeteilt. Die Abdeckung für Verschiebungen in y-Richtung wird im wesentlichen in der oberen und mittleren Ebene mit Hilfe des Abdeckteils 110 und dem Zwischenteil 116 durchgeführt. Die Abdeckung für Verschiebungen in x-Richtung wird dagegen in der mittleren und der unteren Ebene mit Hilfe des Zwischenteils 116 und dem Unterteil, welches in zwei Randteile 120a und 120b unterteilt ist, verwirklicht.

Das Abdeckteil 110 wird durch die Führungen 111 und 112 so auf dem Zwischenteil 116 geführt, daß eine Bewegung des Positionierstiftes 61 dieses nur in y-Richtung relativ zum Zwischenteil 116 verschieben kann. Bei der Verschiebung des Positionierstifts 61 in y-Richtung wird das Abdeckteil 110 mitgenommen, so daß die Länge der Aussparung 118, in der der Positionierstift 61 läuft, wesentlich kürzer als die gesamte nötige Bewegungslänge für den Positionierstift 61 gewählt werden kann. Die Abdeckung in y- Richtung ist dann vollständig, wenn das Bedienungselement den Schlitz 118 vollständig abdeckt und wenn die Länge des Abdeckteils 110 so groß gewählt wird, daß es den Schlitz 119 des Zwischenteils 116 in allen Positionen abdecken kann.

Die Abschirmung bezüglich Bewegungen in x-Richtung wird ebenfalls durch Überdeckung in zwei Ebenen bewerkstelligt. Dazu ist ein Unterteil nötig, das eine Rechteckfläche entsprechend der Bewegungsmöglichkeiten des Positionierungsstiffes 61 freigibt. Dann ist aber das Zwischenteil 116 in der x-Richtung so breit zu wählen, daß diese Rechteckfläche abgedeckt wird. Dies ist nicht immer möglich, da bei zu großem Zwischenteil 116 eine volle Auslenkung durch die Seitenteile des Gehäuserahmens 10 blockiert ist.

Eine demgegenüber günstigere Ausführung kann man erreichen, wenn ein Unterteil 120 benutzt wird, welches den Gehäuserahmen 10 nicht ganz ausfüllt und über eine gewisse Wegstrecke von dem Zwischenteil 116 mitgenommen wird. Der freibleibende Rand muß dann entsprechend von der Abdeckplatte 104 des Tastaturgehäuses überdeckt werden. Das Mitnehmen kann durch entsprechende Schlitze 122 in dem Unterteil 120 bewerkstelligt werden, in welche Noppen auf der Unterseite des Zwischenteils zur Mitnahme eingreifen.

Eine weitere platzmäßige Verbesserung ist aus Fig. 6 ersichtlich. Das Unterteil 120 ist hier in die Randteile 120a und 120b zweigeteilt und weist nach Einbau einen Zwischenraum 121 auf, durch den zusätzliches Spiel tur die Verschiebung der Abdeckung zur Verfügung gestellt wird. In die Teile 120a und 120b sind Eingriffslöcher 122 angearbeitet, in welche das Zwischenteil 116 mit Hilfe von nicht dargestellten Noppen eingreift. Die Noppen dienen dazu die Verschiebung des Zwischenteils 116 in y-Richtung die Teile 120a oder 120b mitzunehmen. Der dadurch entstehende Freiraum zwischen dem Gehäuserahmen 10 und einem der Teile 120a oder 120b wird von der Abdeckplatte 104 der Tastatur übergedeckt. Das Zwischenteil 116 ist mit Federn 114 versehen, die an den Randteilen 120a und 120b an Vorsprüngen 124 angreifen. Diese Maßnahme stellt sicher, daß die Randteile 120a und 120b auseinandergedrückt werden, um eine möglichst geschlossene Abdeckung sicher zu stellen.

Bei dieser Konstruktion, wird das Unterteil 120, bestehend aus den Randteilen 120a und 120b, wenn es an die Gehäusewand anstößt, zusammengeschoben und bei Rückstellung durch Federkraft mittels der Federn 114 wieder auf volle Abdeckgröße ausgedehnt.

Bei der Auslegung der Abdeckteile ist zu beachten, daß sich diese leichtgängig gegeneinander bewegen, um zusätzliche am Stellelement angreifende Reibungskräfte Klein zu halten. Bei der erfindungsgemäßen Konstruktion läßt sich zwar immer ein reproduzierbares Anfahren der Nullposition sicherstellen, wenn die Federkräfte relativ zu den Reibungskräften entsprechend hoch gewählt werden. Aber eine solche Lösung würde auch die leichte Beweglichkeit des Bedienelementes 90 beeinträchtigen. Deshalb ist für alle Abdeckteile genügend Spiel und Leichtgängigkeit vorzuzusehen.

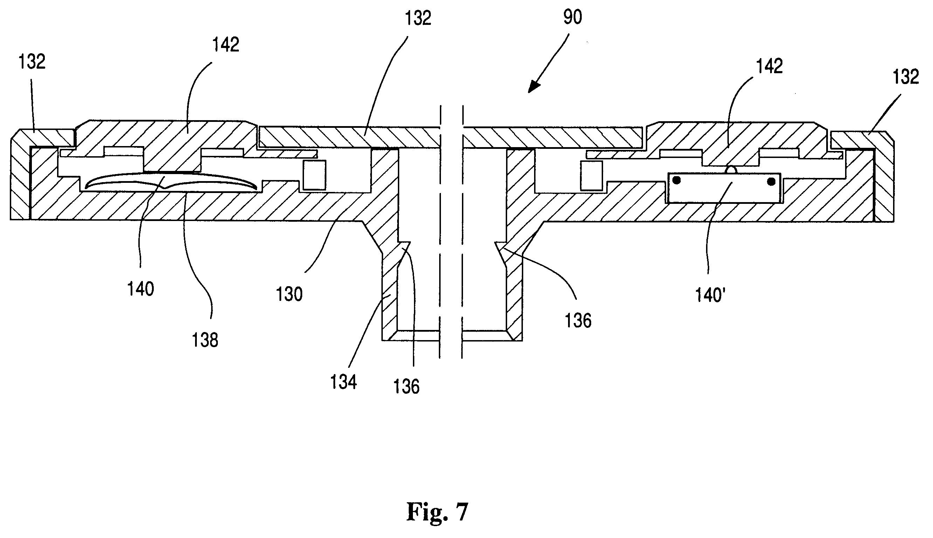

In Fig.7 sind zwei Beispiele für die Ausgestaltung des Bedienungselements 90 gezeigt. Das Bedienungselement weist ein Gehäuseunterteil 130 und einen Deckel 132 auf. Am Gehäuseunterteil ist ein Steckzapfen 134 ausgebildet, mit dem das Bedienungselement auf den Positionierstift 61 aufgesteckt und mit Rasten 136 fixiert wird. Im Gehäuseunterteil 130 liegt eine Schaltfolie 138. Über der Schaltfolie 138 liegen Schnappscheiben 140, mit denen die Schaltfunktionen für die Taster 91bis 94 verwirklicht werden. Die Schnappscheiben werden über die Tastknöpfe 142 betätigt. Der Deckel 132 hält die Taster, Schnappscheiben und das Gehäuseunterteil 130 zusammen.

Auf der rechten Seite von Fig.7 ist schematisch eine etwas andere Ausführung der Tastenschalter dargestellt. Statt der Schaltfolie 138 und den Schnappscheiben 140 sind Mikroschalter 140' eingebaut. Eine solche Ausführung ist dann zweckmäßig, wenn eine besonders leichte Betätigung der Tasterschalter erwünscht ist.

Die Anschlußleitungen für die Taster 91 bis 94 werden durch den Steckzapfen 134 geführt. Die weitere Verbindung zwischen Tastern und der im Tastengehäuse befindlichen Elektronik wird durch das Durchführungsloch 96 des Stellelements 60 ermöglicht.

Die im Ausführungsbeispiel dargestellte Vorrichtung zur Cursorsteuerung ermöglicht einmal durch die Tasten 90 bis 94 eine schrittweise Verstellung des Cursors, wie es bei heute üblichen Tastaturen üblich ist. Zusätzlich ermöglicht die Vorrichtung aber auch Funktionen, wie sie sonst nur durch eine ihr zusätzliche Tastatureinheit, die sogenannte Maus, ermöglicht werden.

Das in die Tastatur integrierte Bedienungselement hat den Vorteil, keinen zusätzlichen Platz zu benötigen. Das macht den Einbau eines solchen Bedienungselements gerade für sogenannte Laptop-Computer wünschenswert, bei denen alle Computerfunktionen innerhalb eines kleinen Koffers eingebaut werden und bei denen normalerweise bei der Bedienung kein Zusatzplatz vorhanden ist.

Die kleineren Strecken, die mit dem Betätigungselement, verglichen mit einer Maus zu überfahren sind, werden dadurch ausgeglichen, daß eine relative Adressierung des Cursors bezüglich einer genau reproduzierbaren Nullposition möglichist. Die erfindungsgemäße Mechanik gestattet eine nahezu reibungs- und dämpfungsfreie Rückstellung, bei der sich keine Schwingungen auf das Stellelement auswirken.

Neben einer relativen Adressierung des Cursors durch die Auslenkung der beschriebenen Vorrichtung zur Cursorsteuerung, ist es auch möglich die Geschwindigkeit der Auslenkung abzuleiten. Dabei wird der Cursor auf dem Bildschirm schneller versetzt, je weiter das Bedienungselement von der Nullposition wegbewegt wird. Gerade bei solch einer Anwendung ist das Anfahren einer genau reproduzierbaren Nullposition wichtig. Würde nämlich keine genau reproduzierbare Nullposition wie beim Stand der Technik möglich sein, dann würde der Cursor ständig driften, was eine sinnvolle Anwendung sehr erschwert. Erst mit einer Cursorvorrichtung gemäß der Erfindung werden solche Schwierigkeiten vermieden.

**Patentansprüche**

1. Cursorvorrichtung mit Nullpunktrückstellung, welche die von einem in einer Ebene bewegbaren Bedienungselement vorgegebene Position oder Positionsänderung in elektrische Signale umwandelt, die einen Computer oder ein Terminal ansteuern, um einen Cursor auf einem Bildschirm in den entsprechenden Richtungen zu bewegen,

wobei das Bedienungselement nach Wegnahme der positionierenden Kraft in eine vorgegebene Nullposition zurückgeht,

wobei die Cursorvorrichtung einen Koordinatengeber für jede von zwei Koordinatenachsen der Bewegungsebene aufweist und die Positionierung jeweils eines Stellelements auf jeweils einer Grundplatte längs der Richtung seiner Koordinatenachse ermöglicht,

wobei die Grundplatte des ersten Koordinatengebers das Stellelement des zweiten Koordinatengebers ist oder mechanisch mit diesem gekoppelt ist, das Stellelement des ersten Koordinatengebers identisch mit dem Bedienungselement oder mechanisch mit diesem gekoppelt ist und die Grundplatte des zweiten Koordinatengebers ortsfest in der Cursorvorrichtung angeordnet ist, dadurch gekennzeichnet,

daß für jeden Koordinatengeber auf der Grundplatte (1; 20; 30) zumindest ein Anschlagelement (3; 22, 24; 54, 56) angebracht ist, welches durch Anschlagflächen zwei Anschlagpositionen (3a, 3b) definiert, zwischen denen sich das Stellelement (2; 30; 60) befindet, wenn die Nullposition eingenommen ist, daß jeder der beiden Anschlagpositionen (3a, 3b) ein in Koordinatenachsenrichtung verschiebbarer Steg (5, 6; 40, 42; 64, 66) zugeordnet ist,
und daß die den Anschlagpositionen (3a, 3b) zugeordneten Stege (5, 6; 40, 42; 64, 66) durch Federn (8; 44, 46; 70, 72) gegen die Anschlagflächen gezogen in der Nullposition zum Anschlag kommen.

2. Cursorvorrichtung nach Anspruch 1, dadurch gekennzeichnet,

   daß der durch die Anschlagpositionen (3a, 3b) in Nullposition gegebenen Stegabstand gleich der von den Stegen (5, 66; 40, 42; 64, 66) eingeschlossenen Breite (9) des zugeordneten Stellelements (2;30;60) ist.

3. Cursorvorrichtung nach Anspruch 1 oder 2, dadurch gekennzeichnet,

   daß mindestens mit einem Stellelement (30) ein Lichtlineal (52) mechanisch verbunden ist, mit dem die Verschiebung des Stellelements (30) optoelektronisch in elektrische Pulse umgewandelt wird.

4. Cursorvorrichtung nach einem der Ansprüche 1 bis 3, dadurch gekennzeichnet,

   daß mindestens ein Lichtlineal (84) an einem Schlitten (80) befestigt ist, welcher von einem Stellelement (60) bei der Bewegung mitgeführt wird.

5. Cursorvorrichtung nach einem der Ansprüche 1 bis 4, dadurch gekennzeichnet,

   daß jeder Koordinatengeber auf seiner Grundplatte (20; 30) Schienen (26, 28; 36, 38) zur Führung der Stege (42, 40; 64, 66) und des Stellelements (30; 60) aufweist, und daß die Stege (42, 40; 64, 66) und das Stellelement (30; 60) entsprechende Nuten (32, 62) haben, in welche die Schienen (26, 28; 36, 38) eingreifen.

6. Cursorvorrichtung nach einem der Ansprüche 1 bis 5, dadurch gekennzeichnet,

daß an einem der Stellelemente (60) ein Positionierungsstift (61) angebracht ist, der zur Halterung eines Betätigungselements (90) dient.

7. Cursorvorrichtung nach einem der Ansprüche 1 bis 6, dadurch gekennzeichnet,

   daß das Betätigungselement (90) vier Tastenschalter (91, 92, 93, 94) aufweist, die jeweils einer Richtung und der Gegenrichtung der Koordinatenachsen zugeordnet sind.

8. Cursorvorrichtung nach mindestens einem Anspruch 1 bis 7, dadurch gekennzeichnet,

   daß die Tastenschalter (91, 92 ,93 ,94) auf der Oberseite des Betätigungselements (90) angebracht sind.

9. Cursorvorrichtung nach mindestens einem Anspruch 1 bis 7, dadurch gekennzeichnet,

   daß zumindest ein Teil der Tastenschalter (91, 92, 93, 93) an den Stirnseiten des Betätigungselements angebracht ist.

10. Cursorvorrichtung nach einem der Ansprüche 1 bis 9, dadurch gekennzeichnet,

    daß der Positionierungsstift (61) eine Längsbohrung (96) zur Durchführung von Streuerleitungen hat.

11. Cursorvorrichtung nach ein oder mehreren Ansprüchen 1 bis 10, dadurch gekennzeichnet,

    daß zwischen Betätigungselement (90) und dem den Positionierstift (61) tragenden Stellelement (60) eine Abdeckungsmechanik angebracht ist, welche für jede Position des Positionierstifts (61) eine Öffnung zur Durchführung des Positionierstifts (61) freiläßt, die kleiner ist als die vom Betätigungselement (90) abgedeckte Fläche.

12. Cursorvorrichtung nach Anspruch 11, dadurch gekennzeichnet,

    daß die Abdeckungsmechanik über drei Ebenen aufgebaut ist,

    daß ein Abdeckteil (110 in der ersten Ebene verschiebbar angeordnet ist, welches ein rechteckiges Loch (118) hat, das in der ersten Koordinatenrichtung (x) eine für die Aufnahme des Positionierstifts (61) ausreichende Größe hat und in der zweiten Koordinatenachsenrichtung (y) eine Länge hat, die kürzer ist, als die auf das Abdeckteil (110) projizierte Länge des Betätigungselements (90),

daß sich in der zweiten Ebene ein Zwischenteil (116) befindet, das Führungen (111, 112) aufweist, welche eine Bewegung des Abdeckteils (110) relativ zum Zwischenteil (116) nur in der zweiten Koordinatenachsenrichtung (y) erlauben, wobei das Zwischenteil (116) eine rechteckige Öffnung (119) aufweist, über welcher sich das Abdeckteil (110) bewegt, die in der ersten Koordinatenrichtung (x) kleiner als die Breite des Abdeckteils (110) ist und in der zweiten Koordinatenachsenrichtung (y) größer als die Länge des möglichen Verschiebungsweges des Positionierungsstiftes (61) aber Kleiner als die Länge des Abdeckelementes (110) ist,

und daß in der dritten Ebene ein zwei Randstreifen umfassendes und in der ersten Koordinatenachsenrichtung (x) verschiebbares Unterteil (120a, 120b) angeordnet ist, wobei ein Freiraum zwischen den beiden Randstreifen (120a, 120b) besteht, welcher der Fläche des von dem Positionierstiftes überstreichbaren Bereiches entspricht

13. Cursorvorrichtung nach Anspruch 12, dadurch gekennzeichnet,

daß der Unterteil aus zwei separaten Randstreifen besteht, die zwischen den beiden Randstreifen (120a, 120b) eine rechteckige Öffnung freigeben, die in der zweiten Koordinatenachsenrichtung (y) kleiner als die Ausdehnung des Zwischenteils (116) aber größer als die Länge des in dieser Richtung möglichen Verschiebungsweges des Positionierstifts (61) ist und die in der ersten Koordinatenachsenrichtung (x) bei maximalem Abstand (121) größer als der benötigte Vershciebungsweg des Positionierstifts und kleiner als die Ausdehnung des Zwischenelements in dieser Richtung ist,

daß am Zwischenteil (116) Nocken angebracht sind, die in Schlitze (122) des Unterteils eingreifen und die Randstreifen (120a,120b) bei einer Verschiebung des Zwischenteils 116 in der ersten Koordinatenachsenrichtung (x) teilweise mitnehmen,

und daß an gegenüberliegenden Außenrändern des Zwischenteils (116) Federn (114) angebracht sind, die an Vorsprüngen (124) auf den Randstreifen angreifen und die Randstreifen (120a und 120b) auf maximalem Abstand halten.

14. Cursorvorrichtung nach mindestens einem Anspruch 1 bis 13, dadurch gekennzeichnet,

daß sie in einer Tastatur eingebaut ist.

Fig. 1

Fig. 2

**Fig. 3**

Fig.4

**Fig. 5**

**Fig. 6**

EP 0 482 420 A1

Fig. 7

**EUROPÄISCHER RECHERCHENBERICHT**

| EINSCHLÄGIGE DOKUMENTE | | | EP 91117156.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
| X | DE - A - 3 832 459 (SASSE) * Gesamt * -- | 1,3,4, 15 | G 06 K 11/18 G 06 F 3/033 G 05 G 9/047 G 09 G 5/08 |
| X | WO - A - 90/03 013 (WAJDA) * Seiten 4-9; Fig. 1-5 * | 1 | |
| A | | 2-5,7- 9,14 | |
| D,X | WO - A - 86/04 166 (KLEY) * Seiten 1-16; Ansprüche 1-40; Fig. 1,2,4 * ---- | 1-14 | |

| RECHERCHIERTE SACHGEBIETE (Int. Cl.⁵) |
|---|
| G 06 K G 06 F G 05 G G 09 G |

Der vorliegende Recherchenbericht wurde für alle Patentansprüche erstellt.

| Recherchenort | Abschlußdatum der Recherche | Prüfer |
|---|---|---|
| WIEN | 30-01-1992 | MIHATSEK |